Europäisches Patentamt

European Patent Office

Office européen des brevets

(11) Publication number : **0 537 119 A1**

(12) **EUROPEAN PATENT APPLICATION**

(21) Application number : **92830528.3**

(22) Date of filing : **25.09.92**

(51) Int. Cl.⁵ : **A61C 1/00, C02F 1/00**

(30) Priority : **09.10.91 IT BO910359**

(43) Date of publication of application :
**14.04.93 Bulletin 93/15**

(84) Designated Contracting States :
**DE ES FR IT**

(71) Applicant : **CASTELLINI S.p.A.**
**Via Saliceto, 22**
**I-40013 Castelmaggiore (Bologna) (IT)**

(72) Inventor : **Castellini, Franco**
**Via D'Azeglio, 21**
**I-40123 Bologna (IT)**

(74) Representative : **Lanzoni, Luciano**
**c/o BUGNION S.p.A. Via dei Mille, 19**
**I-40121 Bologna (IT)**

(54) **Apparatus for periodically sterilizing/disinfecting an online water filter to produce water for medical uses.**

(57)    The device is installed on a first pipeline (1) supplying water typically to a dental surgery apparatus by way of a conventional filter unit (3), and comprises a first combination of shut-off and directional valves (7) installed upstream of the filter, serving to control a second pipeline (5) connected at one end to a separate tank (6) filled with sterilizing liquid and at the remaining end to the first pipeline (1), in such a way that the liquid can be directed into and through the filter unit (3) ; a second set of shut-off and directional control valves (8), installed downstream of the filter unit (3) on the first pipeline (1), serves to channel the sterilizing liquid discharged from the filter unit into a waste pipeline (9).

EP 0 537 119 A1

The present invention relates to a device by means of which to disinfect and/or sterilize filters of the type fitted to medical and in particular dental surgery apparatus, for the purpose of sterilizing the utility fluids supplied to such apparatus.

There is ample evidence, in the art field embracing apparatus of the type in question, of the existence of several types of systems or devices by means of which to disinfect and/or sterilize instruments or handpieces forming part of the apparatus, together with their fluid supply pipelines; similarly, it is recognized as important and fundamental that the fluids used by such apparatus should undergo these same treatments, or at least should be aseptic to an acceptable degree.

The difference between sterilization and simple disinfection consists exclusively in the duration of the operation; accordingly, where reference is made in the specification to sterilization only, the shorter process of disinfection is implicit.

Until recently, the fluids utilized by apparatus of the type in question consisted in water supplied directly from the domestic main (i.e. untreated, since drinking water would be deemed nominally free of any infectious substances), and air supplied by a compressor operating with its inlet directly open to the surrounding ambient.

In medical treatment centres, on the other hand, water is often used for the purpose of cleansing wounds occasioned during surgical operations, such as the operations performed by dental surgeons, for example. Consequently, the water supply needs not only to be potable, but also to be devoid of any pathogenic or pyrogenic elements given that contact will occur with one of the pathways most likely to carry a possible infection.

The elimination of such pathogens or pyrogens is made possible with a filter unit as disclosed by the present applicant in Italian patent 1,225,005, which is installed upstream of the apparatus and comprises, for each of the fluids to be sterilized (air and water), a plurality of physical-mechanical type filter elements arranged in series along the respective supply pipeline. One of the elements in question ensures a low permeability in respect of the particular fluid, and absolute filtration to particle sizes smaller than those of the pathogens requiring elimination.

It has been found however that a drawback occurs over time, especially in the case of a filter unit installed on the water supply pipeline, deriving from the mechanical construction of the filter unit itself: notwithstanding the passage of the fluid through the filter elements, in effect, it happens that pathogenic or pyrogenic elements are found to flow downstream of the filter in high percentages (high, that is, in relation to the values nominally assured by filtration), a situation not apparently due to any inefficiency of the filter elements but attributable rather to a small though persistent leakage of fluid past the component parts of the filter unit.

Accordingly, the object of the present invention is to overcome the drawback in question by providing a device for the disinfection and/or sterilization of filter units such as will be capable of operating simply and swiftly at prescribed intervals, without manual intervention, and of maintaining the filter unit thus serviced in faultless working condition for notably long periods.

The stated object is realized in a device for the disinfection and/or sterilization of a filter unit as fitted in particular to dental surgery apparatus for the purpose of sterilizing a fluid supplied to the apparatus by way of at least a first pipeline, which is characterized in that it comprises first directional control means positioned on one side of the filter unit, associated with a second pipeline carrying sterilizing liquid of which one end is connected to a relative tank and the remaining end to the first pipeline in such a way that the liquid can be directed into and through the filter unit, and second directional control means positioned on the side of the filter unit opposite from the first means, associated with the first pipeline, by which the sterilizing liquid leaving the filter unit is channelled into a waste outlet pipeline.

The invention will now be described in detail, by way of example, with the aid of the accompanying diagram which illustrates a possible embodiment of the device.

With reference to the accompanying diagram, the device disclosed is suitable for application to a filter assembly, denoted 12 in its entirety, of the type associated with dental surgery apparatus and serving to sterilize the operating fluids used by such apparatus; installed on a first water supply pipeline 1 of the apparatus (which also comprises an air supply line, though this is ignored in the specification, not being pertinent to the subject matter of the invention), the typical assembly 12 comprises a plurality of filter elements 3f (each consisting generally in a transversely disposed baffle of paper and fabric), disposed in series along the first pipeline 1, by which the pipeline itself is divided into an inlet branch 1e admitting untreated fluid and an outlet branch 1u delivering purified fluid. The filter elements 3f are placed upstream of the dental surgery apparatus 4, grouped together internally of a self-contained unit 3 such as can be fitted to the apparatus 4 in conjunction with on-off means 2 and 22 (conventional solenoid valves controlled from an external panel) installed on the first pipeline 1 preceding and following the unit 3 and serving in effect to allow or disallow flow through the pipeline 1.

7 denotes first shut-off and directional control means located on one side of the filter unit 3 and serving to allow or disallow a flow of disinfecting and/or sterilizing liquid through a second supply pipeline 5 or 5a connected at one end to a relative tank 6 or 6a, remote from the assembly 12, and at the remaining end to the first pipeline 1, in such a way that sterilizing liquid can be passed into and through the filter unit 3. The liquid might be a commercially formulated hypochlorite for example, or peroxide, perborate etc., or indeed any other, provided that its composition includes oxidized elements to ensure that there will be no lingering residues produced.

8 denotes second shut-off and directional control means located on the opposite side of the filter unit 3 from the first means, by which the flow of disinfecting and/or sterilizing liquid discharged from the filter unit 3 can be passed into a waste outlet pipeline denoted 9.

More exactly, and in a first possible embodiment, the first shut-off and directional control means 7 are installed upstream of the filter unit 3, in relation to the general flow direction denoted F, whilst the second shut-off and directional control means 8 are placed downstream of the unit 3, such that the flow direction of the sterilizing liquid entering and leaving the filter unit is concurrent with that of the water.

Alternatively, and in a second possible embodiment (shown by phantom lines in the diagram), the first shut-off and directional control means 7 are placed downstream of the filter unit 3 in relation to the general direction of flow F and the second shut-off and directional control means 8 are placed upstream of the unit, in such a way that the direction of the flow of sterilizing liquid entering and leaving the filter unit is reversed in relation to that of the water.

The second solution described would be preferable where, in addition to a routine disinfection or sterilization, the need also exists to re-establish the permeability of the filter elements 3f.

As discernible from the accompanying diagram, the first and second shut-off and directional control means 7 and 8 incorporate the first on-off means 2 and 22, in conjunction with second on-off means 10 or 10a and 11 or 11a (the 'a' numbers are those relative to the contraflow embodiment) consisting in solenoid valves operated from an external panel, installed on and controlling the second pipeline 5 or 5a and the waste pipeline 9 or 9a, respectively; naturally, the first on-off means 2-22 and the second on-off means 10-11 or 10a-11a will operate in shuttle mode, i.e. the first means closing when the second are opened, and viceversa. To avoid any problems with discharge when using the contraflow solution, at all events, a preferred embodiment of the device will include two waste pipelines 9 and 9a, one upstream and one downstream of the filter unit 3, each of which controlled by corresponding on-off valves.

The further option exists of installing a third outlet pipeline 14 to run from the filter unit 3, proportioned to allow a continuous and controlled drain at a rate of flow less than the normal rate of flow through the first pipeline 1, of which the discharging end is connected to the waste outlet pipeline 9.

This third outlet or drain pipeline 14 is installed upstream of the filter elements 3f and at a height greater than that of the inlet admitting the first water supply pipeline 1, i.e. the untreated fluid inlet branch 1e; more exactly, the drain line 14 will be connected to the topmost part of the filter unit 3, above the level both of the filter elements and of the first pipeline 1 (where a drain line 14 is installed, the various shut-off means must be arranged for forward-flow sterilization).

In the light of the above description, the process of disinfecting and/or sterilizing a filter unit 3 by means of the device disclosed is easily deduced; accordingly, there now follows a brief description of the single steps.

The first step is to shut off the flow of water through the first pipeline 1 by closing the first on-off valves 2 and 22 upstream and downstream of the filter assembly 12, whereupon the second on-off valves 10 and 11 open up automatically and allow the sterilizing liquid respectively to pass from the second pipeline 5 into and through the filter unit 3 and to discharge via the waste pipeline 9. A second step consists in exposing the interior of the filter unit 3 to the action of the liquid for a predetermined duration, according to the type of operation envisaged (30 minutes approximately for a simple disinfection, or at least 2 hours for a full sterilization).

A third step, which might be preceded by a pause of a few minutes, consists in flushing out the filter unit 3 in such a way as to expel all traces of the liquid through the waste outlet pipeline 9.

The final step is to restore the normal flow of water through the first pipeline 1 and the filter elements 3f by closing the second on-off valves 10 and 11 and thus opening the first on-off valves 2 and 22.

The functions of the various valves will be more readily appreciated by observing the accompanying diagram in conjunction with the following table of reference numbers.

|  | ON | OFF |
|---|---|---|
| FORWARD FLOW (arrow F1) | | |
| 1) Normal operation | 2-22 | 10-11 |
| 2) Disinfect/sterilize | 10-11 | 2-22 |
| 3) Pause | | 2-22-10-11 |
| 4) Flush | 2-11 | 10-22 |
| CONTRAFLOW (arrow F2) | | |
| 1) Normal operation | 2-22 | 10a-11-11a |
| 2) Disinfect/sterilize | 10a-11a | 2-22-11 |
| 3) Pause | | 2-22-10a-11-11a |
| 4) Flush | 2-11 | 22-10a-11a |

F3 denotes the flushing direction, which remains the same whether step 2) is implemented in forward flow or in contraflow, given that step 4) utilizes untreated water from the domestic main supplied by way of the first pipeline 1.

The device disclosed thus allows of ensuring that filter units provide a high standard of operation and safety, and for long periods, without the need for frequent and costly servicing.

Adopting the continuous drain solution, moreover, it becomes possible to achieve a slow (hence not unduly wasteful) but constant replacement of the untreated water entering the filter unit, even with the outlet branch 1u blocked, and thus avoid the accumulation of impurities inside the filter unit.

Similarly, the fact that the water supplied to the apparatus is normal drinking water signifies that one has a slow but constant passage, through the "soiled" part of the filter, of water containing traces of the potability-ensuring disinfectants added at source, the action of which thus continues to be exercised even with the filter outlet closed; accordingly, the continuous drain feature ensures that the residual action of such disinfectants will not be totally depleted.

With the disinfection or sterilization cycle in progress or the apparatus switched off, the drain line ensures that the filter unit 3 will never be completely emptied out, as the relative connection is positioned in the topmost part of the unit; the disinfecting or sterilizing agents can therefore be left to act, even for prolonged intervals, without being lost.

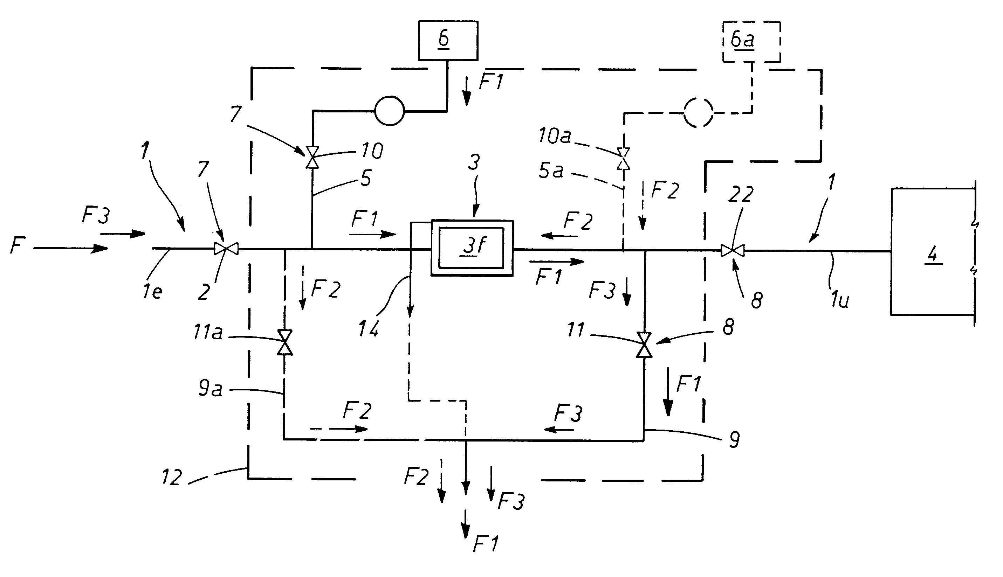

## Claims

1) A device for the disinfection and/or sterilization of filter units associated with medical apparatus, in particular dental surgery apparatus, for the purpose of sterilizing the utility fluids supplied to such apparatus, and comprising a plurality of filter elements (3f) disposed in series at least on a first water supply pipeline (1), grouped together internally of a self-contained unit (3) installed upstream of the apparatus (4) in conjunction with on-off means (2, 22) positioned on either side of the unit (3) such that the first pipeline (1) is divided into an untreated fluid inlet branch (1e) and a purified fluid outlet branch (1u),
characterized
in that it comprises:
- first shut-off and directional control means (7) positioned on one side of the filter unit (3), associated with a second pipeline (5) carrying disinfecting and/or sterilizing liquid of which one end is connected to a relative tank (6) and the remaining end to the first pipeline (1) in such a manner that the liquid can be directed into and through the filter unit (3);

- second shut-off and directional control means (8) positioned on the side of the filter unit (3) opposite from the first means (7) and associated with the first pipeline (1), by which disinfecting and/or sterilizing liquid leaving the filter unit (3) is channelled into a waste outlet pipeline (9).

2) A device as in claim 1, further comprising a third pipeline (14) connected at one end to the filter unit (3) and allowing a continuous controlled drain from the unit at a rate of flow less than the rate of flow through the first pipeline (1), of which the remaining end connects with and discharges into the waste outlet pipeline (9).

3) A device as in claim 2, wherein the third pipeline (14) is installed upstream of the filter elements (3f) and connected to the unit (3) at a height above the height at which the untreated fluid inlet branch (1e) of the first pipeline (1) is connected to the unit.

4) A device as in claim 2, wherein the third pipeline (14) is installed upstream of the filter unit (3) and connected to the topmost part of the unit at a height above the level of the filter elements (3f) and above the height at which the first pipeline (1) is connected to the unit.

5) A device as in claim 1, wherein the first shut-off and directional control means (7) are positioned upstream of the filter unit (3) in relation to the direction of flow through the first pipeline (1), and the second shut-off and directional control means (8) are positioned downstream of the unit, such that the direction of the flow of disinfecting and/or sterilizing liquid entering and leaving the filter unit is concurrent with the direction of flow through the first pipeline.

6) A device as in claim 1, wherein the first shut-off and directional control means (7) are positioned downstream of the filter unit (3) in relation to the direction of flow through the first pipeline (1) and the second shut-off and directional control means (8) are positioned upstream of the unit (3), such that the direction of the flow of disinfecting and/or sterilizing liquid entering and leaving the filter unit is contrary to the direction of flow through the first pipeline.

7) A device as in claim 3, comprising two waste outlet pipelines (9, 9a) positioned on opposite sides of the filter unit (3) and controlled by respective on-off means (11, 11a).

8) A device as in claim 1, wherein each of the first on-off means (2, 22) constitutes a respective part of the first and second shut-off and directional control means (7) and (8), in conjunction with second on-off means (10, 11 or 10a, 11a) installed respectively on the second pipeline (5 or 5a) and the waste outlet pipeline (9 or 9a) and operated in shuttle mode with the first on-off means.

9) A device as in claim 1, wherein the disinfecting and/or sterilizing liquid is composed at least of oxidized elements.

10) A method of disinfecting and/or sterilizing filter units by means of a device as in preceding claims, characterized
in that it comprises the steps of:

a) shutting off the incoming flow of fluid from the first pipeline (1) and thereupon allowing the disinfecting and/or sterilizing liquid to pass from the second pipeline (5) into and through the filter unit (3) and discharge by way of the waste outlet pipeline (9);

b) exposing the interior of the filter unit (3) to the action of the disinfecting and/or sterilizing liquid for a predetermined duration, according to the type of operation envisaged;

c) flushing out the filter unit (3) by directing fluid into one side of the unit in such a way as to expel all traces of the liquid from the opposite side into the waste outlet pipeline (9);

d) restoring the normal flow of fluid through the first pipeline (1) and the filter unit (3).

4

1

1u

8

22

8

9

F1

F2

F2

11

F3

F1

F3

10a

5a

F2

F3

6a

F1

6

3

3f

F2

F3

F1

F2

14

F1

10

5

F2

F1

F2

7

7

2

11a

9a

12

1

1e

F3

F

European Patent Office

**EUROPEAN SEARCH REPORT**

Application Number

EP 92 83 0528

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | BE-A-853 566 (HOESCHLER) 1 August 1977 * the whole document * in particular see: * page 6, paragraph 3 * --- | 1,6 | A61C1/00 C02F1/00 |
| D,Y | EP-A-0 350 459 (CASTELLINI) * the whole document * & IT-A-1 225 005 --- | 1,6 | |
| A | EP-A-0 277 885 (PALL CORPORATION) * page 12, paragraph 2; figure 4 * ----- | 2 | |

**TECHNICAL FIELDS SEARCHED (Int. Cl.5 )**

A61C
C02F
A61L
A61M

The present search report has been drawn up for all claims

| Place of search | Date of completion of the search | Examiner |
|---|---|---|
| THE HAGUE | 22 JANUARY 1993 | PAPONE F. |